# EUROPEAN PATENT SPECIFICATION

(11) **EP 1 802 071 B1**
(45) Date of publication and mention of the grant of the patent: **23.07.2008**
(21) Application number: 05112745.4
(22) Date of filing: 22.12.2005
(51) Int. Cl.: H04L 29/06

(54) **Apparatuses and computer program for connecting a visitor's device to a network and enforcing a security policy based on the personalisation data**
Vorrichtungen und Computerprogramm zur Netzwerkanbindung eines Geräts eines Besuchers und Umsetzung einer auf den Personalisierungsdaten basierenden Sicherheitsrichtlinie
Dispositifs et logiciel pour connecter un appareil d'un visiteur à un réseau et appliquer une politique de sécurité basée sur les données de personnalisation

(43) Date of publication of application: 27.06.2007
(73) Proprietor: NTT DoCoMo, Inc., Tokyo (JP)
(72) Inventor: Lachmund, Sven, 80687, Muenchen (DE)
(74) Representative: Betten & Resch

(56) References cited:
- WO-A-02/11391
- WO-A-02/37771
- WO-A-20/04034229
- US-A1- 2005 030 917
- US-A1- 2005 102 529
- US-B1- 6 757 719

## Description

### FIELD OF INVENTION

The present invention relates to an apparatus for connecting a visitor's computing device to a network, in particular to a network having a limited access.

### BACKGROUND OF THE INVENTION

Companies or other entities today usually operate a corporate network to connect computers and communication devices to process workflows, or to create, manage, and transport digital assets within the network. Beside companies there are other entities or organisations such as government or non-profit organizations that do this as well. This corporate network is usually closed to prevent others that do not belong to the company from accessing the network. The network is completely operated by the company and it is designed to fulfil the company's interests regarding use and security. Thus, it belongs to one administrative domain - the company. Today, mobile devices such as notebooks, personal digital assistants (PDA), smart phones, and mobile phones are commonly used. These devices are able to communicate with other devices and they are also able to connect to digital networks like computer networks (LAN, WLAN, Bluetooth) and cellular networks (GPRS, UMTS/FOMA). As long as a company equips its employees with prepared mobile devices that are designed to be used to perform corporate processes, these devices can be included in the corporate network. In this case the company has to have control of the devices and it also has to maintain them. Security aspects are important here: to prevent employees from bringing applications like Trojan horses, spy-ware, worms, and viruses (so-called "mal-ware"), that may be transported via the mobile device, to the corporate network, the device's functionality has to be restricted. This is mostly to be done by enforcing security policies that can be administered centrally by the corporate IT department. Furthermore, corporate data that is allowed to be stored on the mobile devices has to be limited to prevent employees from disclosing corporate information that should not leave the company. A suitable authorization and access control scheme is needed here.

However, since standard mobile devices that are available today are not aware of these requirements, companies have to deploy their own solutions to achieve their goals in order to maintain security of the corporate network.

Many employees today have their own mobile devices and as they are small and powerful, people usually carry them with them all the time. In this way, these devices enter corporate areas. Mostly they are equipped with wireless communication technologies like WLAN, Bluetooth and IrDA and they often seek for available networks and communication partners automatically and connect if possible. This brings a high risk of influencing the corporate network in a negative way as these devices may bring mal-ware or do other things that are not allowed by corporate policy as discussed above.

The same holds for visitors that come to visit the company. These visitors mostly are clients, consultants, or business partners that bring their own mobile devices to use them to do their job. A simple way to avoid these risks to the company is to prohibit mobile devices to access the corporate network that do not belong to the company. As it is quite common and mostly even necessary for consultants and business partners to bring their own mobile devices to do their job, this is not a practicable solution. In some cases it is even necessary to allow a visitor to connect his mobile device to the corporate network (for instance to share documents, to use a printer, or to connect to the internet). It is in a company's interest to allow this to not cut down employee's and visitor's productiveness. However, restrictions to the mobile devices are needed as discussed above. As soon as a mobile device does not belong to the company it is not included in the company's administrative domain. If the device connects to the corporate network this means that the corporate administrative domain and the administrative domain of the employee/visitor - built by the employee's/visitor's device - are connected. However, the mobile device in this case cannot be controlled by the corporate IT department, as there is no way for the company to enforce its security policy on this mobile device. Therefore there is a need for a mechanism enabling a company to restrict the mobile device's access to the corporate network. Preferably, since visitors need to access different resources, according to their job, individual authorization and access control should be provided.

There are several existing approaches to deal with the aforementioned problem.

One approach is to forbid foreign mobile devices: mobile devices that do not belong to the company, i.e. those that belong to employees or to visitors, are prohibited. This hinders visitors like consultants or partners from doing their job properly as it is quite common today to access resources like the internet during work and therefore is not an appropriate solution of the problem.

According to another approach there is provided a separate network for visitors: there is a separate network segment for visitors that has no access to the corporate network or that only offers restricted access to specific resources. However, an individual access regulation on a per-user basis cannot be performed with this solution as there are access regulations for the entire visitor network.

A further approach is given by the Network Admission Control (NAC) initiative led by Cisco Systems described e.g. in http://www.cisco.com/en/US/netsol/ns466/networking solutions package.html. This approach provides a collection of mechanisms, services and applications which are aimed at solving the same problem as stated above. The approach is based on that devices (of the visitor) have to prove themselves by providing credentials that they comply with a security policy that is defined by the visited network. This means that the device has to be checked with respect to its compliance with the security policy, possibly some additional amendments or installations must be made on the device, and therefore this involves a considerable administrational effort.

Another approach is the electronic Security Inspector (sSl) which is a solution of the Fraunhofer Institut which is described e.g. in http://www.sit.fhg.de/ SIT-Projekte/esi/index.htm. The approach is based on an additional piece of software which is to be installed on each computer to monitor its compliance to the security policy. Since this approach needs installing software, it cannot be used with visiting devices, at least not in a convenient manner. Moreover, often no software should be installed on the visiting device because the visitor refuses to do so or because this may infringe the visitor's company policy.

Accordingly there is a need for solving the above-stated problem in a manner which avoids the shortcomings of the known approaches.

WO 2004/034229 discloses a system of providing network access comprising a processor, a first network interface coupled to the processor, a second network interface coupled to the processor, a storage media accessible by the processor and a set of computer instructions stored in the storage media, executable by the processor. In one embodiment of the present invention, the computer instructions can be executable to receive a network communication over the first network interface from a user using a user device and determine if the network communication is associated with an authenticated user. If the network communications not associated with an authenticated user, the computer instructions can be executable to direct the user to an authenticated interface. The computer instructions can be further executable to receive credentials from the user and authenticate the user based on the credentials. Another embodiment of the present invention can include a system for providing access to a network that comprises a processor, a first network interface coupled to the processor, a second network interface coupled to the processor, a storage media accessible by the processor and a set of computer instructions stored on the storage media. The computer instructions can be executable by the processor to receive a user profile and provision a user with access to a network based on the user profile.

US 2005/0102529 discloses a gateway for mobile access includes a foreign agent that receives user profile data and session state data from a home authentication, authorization and accounting (AAA) system of a mobile node, and a dynamic packet filter that performs multi-layer filtering based on the user profile date. The foreign agent transfers a session from a first network to a second network without session interruption, using the session state data, when the mobile node moves from the first network to the second network. The packet filter permits Internet access by the mobile node without passing Internet data requested by the mobile node through the first network.

### SUMMARY OF THE INVENTION

The present invention is defined in the independent claims. The dependent claims define embodiment of the invention.

An apparatus according to an embodiment acts as a mediating apparatus which acts as intermediary between a visitor and a company network. The provision of first and second access units with a filtering unit in-between allows a filtered access to the company network by said visitor. The provision of a personalizing unit into which personalization data may be written allows to enforce a security policy through the filtering unit which is based on said personalization data thereby implementing a "personalized access" to the network for the visitor while maintaining security on the side of the company network by granting only limited access to the visitor based on the personalization data.

According to one embodiment the apparatus comprises:
a look-up unit for looking up a security policy in said computer network based on said personalizing data entered by said administrator into said personalizing unit.

This allows storing, maintaining and administrating the security policy/policies on the company network and enables an easy and efficient administration of the security policy, possibly for many visitors or groups of visitors. Moreover, storing the security policies on the company network places them in a secure environment by placing them within the security architecture of the company network.

According to one embodiment the apparatus comprises:
a storing unit for storing access credentials to enable said secure access unit to access said corporate network.

This enables the apparatus to access the company network on its own, i.e. without the need to input access credentials such as user-ID, password or keys by a user. Instead the apparatus may without further input from a user access the company network, e.g. in order to download a security policy corresponding to certain personalization data stored or held in the personalizing unit.

According to one embodiment the access credentials are stored in a tamper resistant manner. This makes rebuilding the apparatus by an attacker difficult. Moreover, it separates the access to the company network by the second access unit from the access to the apparatus by the visitor not only by applying a filtering but also in terms of the different access credentials applied.

According to one embodiment the apparatus comprises:
a checking unit for checking whether said visitor has successfully accessed said apparatus through said first interface, and
in case of a successful access, for allowing said user to access said corporate network through said second interface while enforcing said security policy by said filtering unit based on said personalization data.

The checking unit blocks the initiation of any traffic to the company network as long as the visitor has not been identified using his access credentials. Only after his identification he will be granted access to the company network while this access is still limited by the security policy which is being enforced based on the personalization data.

According to one embodiment the personalizing unit comprises a smartcard reader to enable said personalizing data to be held in a smartcard.
This makes it particularly easy to personalize the apparatus by writing the personalization data onto a smartcard which is then inserted into the reader to personalize the apparatus

According to one embodiment the first interface is a wireless interface, and/or the second interface is a wireless interface.

This makes connection by the visitor very easy since nowadays almost all mobile computing devices have a suitable wireless interface. Also the connection between the apparatus and the company network can be achieved in a convenient manner if a wireless interface is used as a second interface.

According to one embodiment said apparatus takes the form of a badge which may be worn by a visitor. This is particularly convenient since in almost all environments a visitor has to wear a badge anyway which he receives at the reception. If the apparatus takes the form of a badge there is no need for the visitor to carry an additional device.

According to one embodiment said apparatus comprises:
a device key being specific for said apparatus, and
said device key being bound to said personalization data..

This makes it possible to prevent the personalization data (e.g. the smartcard issued to a visitor) to be used in connection with an apparatus having a different device key (which might be one which has been tampered by an attacker). The binding between device key and personalization data may be carried out by an administrator at an administration unit who also may e.g. carry out an initialization, or it may be done at a location different from where the initialization is done, e.g. at the reception of the company.

According to one embodiment said apparatus comprises:
an initialization unit for initializing said apparatus by connecting to said company network through said second interface and uploading the necessary data to said apparatus to configure it such that it allows said visitor to access the company network.

By the initialization procedure such necessary data as the location of the security policy and the security policy itself maybe uploaded to thereby make the apparatus operable as access device for the visitor.

According to one embodiment said second access unit accesses said company network based on access credentials which are stored in said apparatus in a tamper-resistant manner and are undisclosed to the visitor.

According to one embodiment said apparatus comprises:
a rebuilding unit for rebuilding a service of the company network on said apparatus and for interpreting a service request from the visitor's device and sending an appropriate corresponding request to said company network in accordance with
said security policy.

This allows to provide a "filtering" on the service application level such as to translate a service request which is not in accordance with the security policy into one which is in accordance with the security policy. Moreover, it allows accessing the company network based on access credentials unknown to the visitor and only known to the apparatus.

An administration apparatus according to an embodiment which belongs to the company network is aware of the personalization data of the mediating apparatus (e.g. it has been notified about it during personalization of the mediating apparatus), and based thereupon it may grant or deny access to the company network to the mediating apparatus and thereby in effect to the visitor's device. The decision whether to grant access may alternatively or additionally be based on access credentials which are stored in the mediating device and which are specific for the mediating device, like e.g. a device key or a company key. The access may also be granted or denied based on a combination of both, the personalization data which is specific for the user and personalizes the mediating apparatus for the visitor, and the device specific access credentials which identify and authenticate the device itself, independent of the visitor and the personalization data. The access, however, is limited by the security policy which is enforced by the mediating apparatus.

According to one embodiment said personalization data are stored in said personalizing unit and
said access credentials are stored in a tamper resistant manner in said apparatus, said access credentials comprising one or more of:
a device specific key;
a company specific key.

The personalization data which are stored in the personalizing unit or entered therein e.g. via a smartcard identify the device as belonging to a certain visitor, and the access credentials identify the mediating apparatus itself. The device specific key (and/or the company specific key) allows the administration apparatus to verify that the device may be granted access based on a comparison of the personalization data and the device specific data presented by the device with the data which is stored in the administration apparatus.

According to one embodiment the administration apparatus comprises:
an administration unit for storing administration data about any apparatus and its corresponding personalization data, wherein
said administration data comprises device specific data for said apparatus which is assigned corresponding personalization data and said checking unit is adapted to check the device specific data and the personalization data presented by said apparatus to based thereupon whether access to said company network is granted or denied.

The administration unit is informed about the "binding" between the mediating apparatus and the visitor which was done during personalization. Based thereupon it may grant or deny access to the mediating device to the company network.

According to one embodiment said administration unit is adapted to store a security policy corresponding to said personalization data and further adapted to allow transfer of said security policy to said apparatus to thereby implement a limited access to said company network based on said security policy.

This allows a central administration of one (or more) security policies within the company network. The personalization establishes the correspondence between the security policy to be enforced, the visitor and the mediating badge, and based on this correspondence the mediating apparatus may download the security policy which is centrally administrated within the (secure) company network.

### BRIEF DESCRIPTION OF THE DRAWINGS

Fig. 1 schematically illustrates a configuration of an apparatus according to an embodiment of the invention.
Fig. 2 schematically illustrates a configuration of an apparatus according to a further embodiment of the invention.
Fig. 3 schematically illustrates a usage scenario of an apparatus according to an embodiment of the invention.
Fig. 4 schematically illustrates an initialization of an apparatus according to an embodiment of the invention.
Fig. 5 schematically illustrates an initialization of a smartcard according to an embodiment of the invention.
Fig. 6 schematically illustrates message diagram of a usage scenario of an apparatus according to an embodiment of the invention.
Fig. 7 schematically illustrates message diagram of a usage scenario of an apparatus according to a further embodiment of the invention.
Fig. 8 schematically illustrates message diagram of a usage scenario of an apparatus according to a further embodiment of the invention.

### DETAILED DESCRIPTION

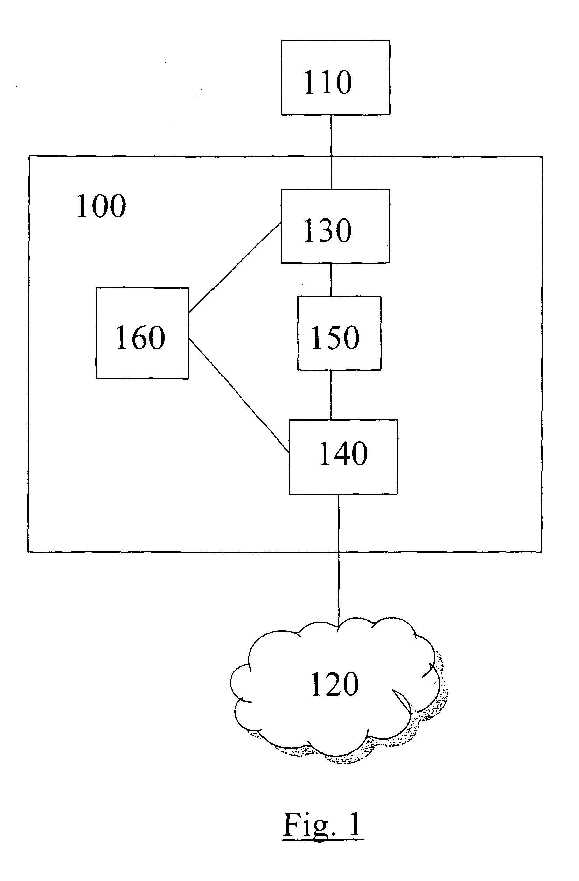

A first embodiment of the invention will now be explained in connection with Fig. 1. An apparatus 100 acts as a mediating device between a computing device of a visitor 110 and a company network 120 to which only a limited access according to a certain security policy should be granted, thereby connecting the visitor's device and the company network.

A first access unit 130 may be accessed by said computing device via a first interface (not shown) of said first access unit. A personalization unit 160 stores personalization data which may have been entered by an administrator into said unit 160. The personalization data personalizes the apparatus 100 as belonging to the visitor. Based on said personalization data a company network grants the visitor's device access to the company network through the first (130) and second (140) access units and the filtering unit 150 which implements a security policy for said access which is based on the personalization data. The personalization data individualizes the apparatus 100 as the one which corresponds to the visitor, and it furthermore determines the security policy to be enforced during the access of the company network 120.

The personalization data may have been entered into said personalization unit by said administrator via a keyboard and a suitable interface (not shown), e.g. by connecting said apparatus to the PC of the administrator, or an administrator may have prepared a smartcard on which said personalization data has been stored and which is inserted into said personalization unit which comprises a smartcard reader through a slot (not shown) to be readout to thereby personalize said apparatus 100. Since a security policy corresponding to the personalization data is enforced, the company network 120 may grant the visitor's device access.

The apparatus when enabling the visitor's device 110 accessing the company network 120 may operate as follows.

The connection between the visitor's device and the apparatus 100 is made through the first access unit 130. Traffic to the company network is then routed through the filtering unit 150 to the second access unit 140 which accesses the company network 120.

The second access unit 140 comprises a second interface (not shown) through which the second access unit may access said company network 120. The filtering unit 150 is connected between the first and second access units and filters the traffic to enforce a security policy to thereby allow computing device 110 to access said company network via said first access unit, said filtering unit and said second access unit while enforcing the security policy which is based on personalization data stored in personalization unit 160. The second access unit may for that purpose access the personalization unit to obtain personalization data and to based thereupon inform filtering unit 150 about the security policy which is to be enforced. In this embodiment the filtering unit operates under control of the second access unit 140 based upon a security policy which is based on the personalization data which the second access unit obtained from the personalization unit 160. The personalization data may itself contain or determine the security policy to be implemented.

According to one embodiment, however, the security policy may be stored within the company network, e.g. on a server, and based on the personalization data the second access unit 140 may connect to the network and download the security policy corresponding to the personalization data and thereby corresponding to the user. For that purpose the apparatus, e.g. the second access unit, may comprise a lookup unit (not shown) which enables apparatus 100 to connect to the company network, to lookup the security policy which should be applied to the visitor identified by the personalization data from personalizing unit 160, and to download the security policy. The second access unit 140 may then based on the thus downloaded security policy instruct or configure the filtering unit to implement and thereby enforce the security policy. Then the traffic from the first access unit 130 via filtering unit 150 and second access unit 140 to the company network 120 may start so that the visitor may access the company network while security is maintained.

As mentioned the security policy is implemented by filtering unit 150 which filters the traffic from the first access unit to the second access unit according to the security policy. This has the effect that the visitor's device, while being able to connect to the first access unit, has only a limited access to the company network due to the filtering performed by the filtering unit 150. The filtering may affect the access to any resources of the company network such as files or directories, devices (e.g. printers or other peripherals) or applications (e.g. application programs or services like internet connection or FTP).

In performing the filtering the filtering unit acts similar to a firewall or an application level gateway in restricting access or affecting traffic in different ISO/OSI layers. The filtering action is done as is considered appropriate for the visitor (or a group of visitors) which has been granted access to the first access unit and thereby to the company network.

According to one embodiment the personalization data may define access credentials which are necessary for the visitor's device to connect to the first access unit 130. This may e.g. such data like user ID, password or keys. These access credentials may be entered into the personalizing unit when entering the personalization data by an administrator, and they may then be handed over to the visitor together with the apparatus 100. Based on these access credentials the first access unit may then grant or deny access to the apparatus 100 to the visitor's device 110.

According to a further embodiment the authentication of the visitor's device towards apparatus 100 is based on mechanisms which are implemented by the first interface, such as e.g. WAP keys, PIN for Bluetooth pairing, or the like. In this case the access credentials which define the access conditions to the apparatus 100 may not be stored on the personalizing unit 160 but rather in the interface itself.

However, according to an even further embodiment the access to the apparatus via the first access unit is not limited by such access credentials. In this case the apparatus 100 does not care which device 110 on the visitor side is connected, and first access unit 130 does not compare any access credentials submitted by the visitor's device with previously stored ones. This may be e.g. the case if the first access unit is accessed by a wired interface rather than a wireless interface, the latter one being more prone to unauthorized access by any third parties moving around. However, even in case of an unlimited access to the first access unit 130, however, with respect to the access to company network 120 security can be maintained because the access to the company network requires passing through the filtering unit 150 which implements a security policy according to the personalization data.

According to one embodiment the apparatus (e.g. the second access unit) may store access credentials allowing it to access the company network through the second interface. Using these access credentials the apparatus may access the company network 120 and e.g. download the security policy which should be enforced for the visitor corresponding to the data held in the personalizing unit.

According to one embodiment the access credentials are stored in the apparatus in a tamper resistant manner. This makes it difficult to access the data and to rebuild an access apparatus by an attacker. The tamper resistant storage may involve e.g. a housing which is stabile and not easy to be broken, however, it may further include such security technologies as storing the access credentials in an encrypted manner, enabling access to the stored access credentials only in case of a user who has identified itself e.g. by a PIN or any other key, providing denial of access to the access credentials in case of multiple failed accesses, and the like. Regarding the technology of how to safely store the access credentials without disclosing them while making it difficult to access them by an unauthorized user reference can be made to smartcard technology which employs such techniques of safely storing data in a tamper-resistant manner.

The tamper-resistant stored access credentials are never disclosed, and they actually separate the access to the network from the visitor's access to the apparatus 100 not only by the filtering unit 100 and the thereby enforced security policy but also by different access credentials, while the access credentials to the company network in any case remain secret.

The access credentials used by the second access unit 140 to access the company network may comprise a device key. Such a device key uniquely identifies the apparatus 100 and based on the device key a company network 120 may decide whether to grant access to the apparatus 100 or not. Such a decision may - in addition to he device key - be based on further access credentials.

The device key may be stored on the apparatus during the manufacturing process, or it may later be generated during the initialization process using a key generating mechanism (e.g. based on a master key). Such mechanisms of generating a device key are e.g. known from the field of smartcard technology and therefore are not discussed here in detail any further.

The device key (and possibly any further access credentials) are according to one embodiment stored on the apparatus 100 in a tamper resistant manner. For that purpose security mechanisms for tamper-resistant storing of data which are known from the field of smartcard technology may be used, e.g. access protection by one or more keys, and denial of further access in case of a number of failed access attempts exceeding a certain threshold.

In addition to a device key there may be stored a company key which identifies the apparatus as belonging to a certain company. This key may e.g. be used by a visitor's device 110 to confirm that the apparatus it intends to connect to actually belongs to the company to the network of which it wishes to connect to.

It should be mentioned here that the second access unit 140 and the filtering unit 150 not necessarily have to be implemented as physically separate units but that they may as well be implemented as an integrated single unit.

Even the first access unit 130 may according to one embodiment be included in such a single integrated unit, and according to one embodiment such a single integrated unit may even include personalizing unit 160.

According to one embodiment the first interface is a wireless interface. This makes it easy for the user to connect to the apparatus, particularly if he moves around in the company. Nowadays almost all mobile computing devices such as laptops, PDAs or mobile phones/smartphones have such interfaces as built in devices which can be made use of to connect to the first interface of apparatus 100.

According to one embodiment the apparatus may additionally or alternatively comprise a wired interface as the first interface, such as e.g. a USB interface. In this case the power supply to the apparatus may be provided by computing device 110 of the visitor thereby avoiding the need for a battery pack on the apparatus 100 itself.

According to one embodiment the second interface of second access unit 140 may be implemented as wireless interface. This makes it convenient to connect to the company network while the visitor may move around.

According to one embodiment the apparatus 100 may take the form of a badge. In this case the apparatus acting as "mediating badge" fulfils two purposes, a first being the "traditional badge functionality" and the second one consisting in allowing the visitor to access the company network.

The "mediating badge" in one embodiment is completely controlled by the company and therefore belongs to the corporate administrative domain. The mediating badge may be implemented in a tamper resistant manner to prevent users from circumventing it or from changing its behaviour. When a visitor comes to the company, the company hands out a mediating badge to the visitor. On the one hand, the mediating badge is used as a normal badge: to identify the person as visitor and to open doors the visitor is allowed to enter (physical access control). On the other hand, with one access unit the mediating badge is connected to the corporate network 120 where it can be identified uniquely. With the other access unit it is connected to the visitor's device 110. The mediating badge then performs routing and filtering functionality between the corporate network and the visitor's mobile device. The mediating badge thereby is controlled by a corporate security policy that enables the mediating badge to restrict the visitor's mobile device's access to the corporate network by the use of filtering unit 150 which is a firewall-like component, implemented on the mediating badge.

It should be noted that if in connection with the following embodiments reference is made to a "badge" or a "mediating badge" this refers only to one possible embodiment and that the apparatus may as well take other forms than a badge while fulfilling the same functionalities.

In one embodiment the mediating badge 100 is placed in-between the corporate network and the mobile device of the visitor and is thereby controlled by the corporate network. The visitor's device is never directly connected to the corporate network. Its activity on the network can be controlled by the mediating badge

Since due to the personalization there is one mediating badge per visitor, communication over the air interface between the mediating badge and the corporate network may be encrypted individually (e.g. by different keys for different visitors/badges).

The visitor's device that acts on behalf of the visitor is identified uniquely on the company network because the mediating badge is identified uniquely based on the personalization data. Therefore, individual access rights to resources on the corporate network can be granted by applying an appropriate security policy. The mediating badge can according to one embodiment be integrated in a company-wide centrally maintained security policy, as it is able to download and process the policy locally and as it can be seen as a user/device account that belongs to the company, that is assigned to the visitor, and that rights can be assigned to.

According to one embodiment the meditating badge is trusted by the corporate network as it is tamper resistant. Therefore it can be integrated in corporate security management without security leakages.

In one embodiment the visitor can bring several devices that can be connected to the mediating badge without changing communication behaviour with the corporate network. There is no administrative effort needed in the corporate network if the visitor brings different or several devices.

According to one embodiment the visitor does not get access credentials for the core corporate network (e. g. WPA keys), he only gets them for the first access unit of the mediating badge. Therefore, the corporate network is protected against the visitor.

According to one embodiment the visitor's mobile device does not have to be specifically prepared for the communication to the mediating badge, e.g. by installing some piece of software. It only has to support the wireless technology implemented in the mediating badge as first interface and standardized communication protocols.

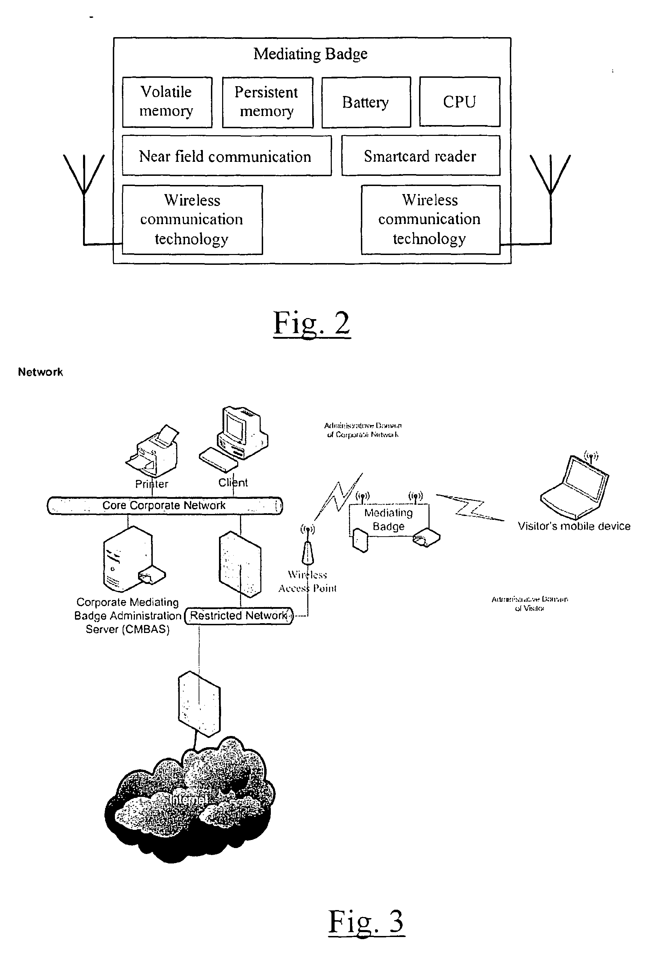

In the following a further embodiment will be described in somewhat more detail in connection with Fig. 2.

In this embodiment the mediating badge is a small hardware component that consists of two (possibly but not necessarily different) wireless technologies/interfaces to send and receive digital data, a battery pack, computational power (CPU), volatile and non-volatile memory for storing data, partly securely stored like on a smartcard in a tamper-resistant manner, a tamper resistant housing and a power switch (not shown). An operating system and some services which implement its functionalities like e.g. a service for reading out personalization data, implementing a security policy, etceteras are running on the mediating badge. It belongs to the company that wants to grant restricted visitor access to the corporate network. The mediating badge is completely controlled by the company and therefore belongs to the corporate administrative domain. The mediating badge is tamper resistant to prevent users from circumventing it or from changing its behaviour. To start operation as a connecting device between a visitor and a company network the mediating badge needs a smartcard with stored credentials that both identify the visitor uniquely and can be used for a corporate access control management to enable individual access control per visitor. The mediating badge hosts functionality with respect to access enablement and access restriction that is comparable to a combination of router and a firewall controlled by a corporate security policy to control the visitor's mobile device's access to the corporate network. The mediating badge is connected to the corporate network via a wireless technology (e. g. WLAN). Its connection to the access point is encrypted properly by using different encryption keys for every badge. The visitor's device is connected to another wireless technology interface on the mediating badge. This could for instance be a personal area network (PAN) technology like Bluetooth. The mediating badge controls network traffic forwarding between the two wireless technology interfaces. Network traffic that is not allowed by the corporate security policy is not forwarded to the corporate network.

When a visitor comes to the company he gets a mediating badge and a personalised smartcard that is prepared for him at the reception. He also gets his credentials - e.g. in the case of Bluetooth it is a PIN - to be able to connect his mobile device to the mediating badge. As soon as the mediating badge is turned on, it downloads the current security policy from a corporate server to be able to make access decisions. Afterwards the visitor is able to connect his device. From the corporate network point of view it does not mind if the visitor connects more than one device simultaneously or if he brings different devices every time he comes. There are no changes needed to the mediating badge or to the security policy because the latter is independently of the visitor's device determined by the personalization data stored on the smartcard. The visitor controls only devices that are connected to the first access unit of the mediating badge.

During runtime, the badge (or its filtering unit which may be implemented by the CPU and a corresponding program stored on the storage of the badge) analyses the network traffic that comes from the visitor's interface of the mediating badge. If the received kind of traffic is allowed, the mediating badge forwards the traffic to the corporate network.

Nowadays traffic is mostly limited to Internet Protocol (IP). In this case, the mediating badge performs packet filtering. Filtering can be done on different layers of the ISO OSI reference model. Layers 2 and 3 can be used to restrict access to hosts or network segments, level 4 can be used to restrict access to specific services and the levels above can be used to limit communication to specific high level network protocols and to disallow specific commands of these high level communication protocols. To enable this, beside the packet filter, an application level gateway (ALG) is also implemented in the mediating badge. As the unique identifier on the smartcard of the mediating badge can be seen as a synonym for the visitor to which the mediating badge is assigned to, it is possible to use this identity for centrally maintained access control to assign specific rights to the visitor or a group of visitors. The smartcard enables the company to give any mediating badge to a visitor every time he visits the company. Only the smartcard is bound to a specific visitor but not the mediating badge itself.

The mediating badge can also be used as an ordinary badge to both identify a person as a visitor when he carries the badge visible on his cloths and to use it to open doors or to pay in the cantina. For this purpose, contact-less near field communication technologies (such as RFID) may be implemented additionally, if the wireless technologies implemented are not suitable for that purpose.

According to one embodiment there is an initialisation process defined to generate the personalised smartcard and to configure the mediating badge. The configuration specifies where to get the security policy from and creates a unique identifier for the mediating badge.

In the following there will be described a further embodiment of the present invention in somewhat more detail.

Referring to Fig. 2 and similar to the embodiment described before the Mediating badge comprises the following components:
- Hardware
   o two wireless communication interfaces implemented by the use of (different types of) wireless communication technologies (e.g. WLAN, Bluetooth)
   o computational power
   o volatile and persistent memory
   o battery pack for power supply
   o near field communication technology (e.g. RFID) for physical access control
   o reader for personal authentication component (smartcard)
   o tamper resistant housing
   o traditional badge functionality (to visualize that it is carried by a visitor)
- Firmware
   o Operating system
   o Services
      ■ network services to the corporate network for configuration and security policy upload (e.g. web front-end, Web Services interface, or SNMP)
      ■ network services to the visitor for providing network configuration information (e.g. DNS, DHCP, WINS)
      ■ network services to the visitor to access resources on the corporate network (SMB, NFS, FTP, HTTP, LDAP, LP)
   o Firewall on the network stack

While today it may be difficult to include all this functionality in a "really badge-sized" device, a size of a PDA can be seen as a feasible and in this size the mediating device may be used like a badge and may be worn in a manner where it is attached to the clothes of a visitor like a badge, as e.g. a pager. This may therefore also be referred to as the mediating badge taking the form of a badge. In the future, when circuits become more and more integrated and smaller, the device may shrink in size.

In the following the functionalities of the mediating badge are described. It provides the following functionality and properties:
- Acting as bridge between two (possibly different) wireless technologies/interfaces (e.g. Bluetooth and WLAN)
- supporting confidential communication for the two wireless communication interfaces (each interface uses different credentials)
- firewall/gateway (layer 3 to 7) (packet filter and application filter)
- applying security mechanisms based on security policy
- maintaining centrally a security policy and implementing it in (possibly multiple) mediating badges by the following mechanisms:
   o Mediating badge downloads security policy every time it is turned on
   before it accepts any network activity
   o central policy management sends the policy to the Mediating badge each time it has been changed
      - the security policy specifies what the Mediating badge is allowed to do on the corporate network, configures the firewall (filtering unit) on the Mediating badge in both directions
      - the mediating badge holds unique credentials (securely stored, e.g. in a smartcard-like component that is not removable and not accessible to unauthorized parties) to identify the Mediating badge on the corporate network (device key)
      - the personal authentication component (e.g. a smartcard) contains user credentials for the visitor that are used on the corporate network to define access rights of the visitor which are assigned to the mediating badge holding the personal authentication component
      - the mediating badge can identify itself against the visitor's device with a global company key (held by all Mediating badges of the same company)
      - the mediating badge can switch visitor identities (by changing smartcards)
      - for the corporate network side of the mediating badge and the corporate network there are no changes required if the visitor connects different or multiple devices
      - the mediating badge is used for physical access control (near field communication technology such as RFID)
      - the mediating badge is capable of performing network address translation (NAT) and to act as a proxy for the visitor side

In the following the functionality of the mediating badge will be explained in somewhat more detail in a configuration as shown in Fig. 3. In Fig. 3 a visitor's mobile device connects to a corporate network through the mediating badge. The corporate network consists of a core network having several connected devices such as clients and peripherals like printers. It further comprises a corporate mediating badge administration server (hereinafter referred to as CMBAS) which stores and administrates the security policy/policies enforced on the network by one or more mediating badges.

The Mediating badge is controlled by the administrative domain of the corporate network. Since it is tamper resistant and since the visitor only is able to access the visitor side of the Mediating badge, visitors never get access directly to the corporate network. The Mediating badge represents the visitor on the corporate network.

The Mediating badge can be used for different visitors (e.g. by changing smartcards). There is a removable component (the smartcard), which is personalized for the visitor. It does not matter which Mediating badge is used for a particular user.

According to one embodiment mediating badges which belong to a certain company all can be identified by checking whether they have the same company key stored thereon. A visitor in such a case may connect his device 110 to any mediating badge in which he inserts the smartcard which was personalized for him as long as the mediating badge is from the same company, i.e. as long as the corporate key stored on the mediating badge is the same. User data (such as user key, user name, user affiliation, user contact data) will be stored on the smart-card. The Mediating badge is working only if a valid smart-card is inserted. To prevent the visitor from using the smartcard in another (possibly manipulated) Mediating badge, the smartcard is bound to the Mediating badge during the time the visitor visits the company. The reception binds device key and user key on the corporate security policy server (the CMBAS) when the visitor receives the Mediating badge together with the smartcard. The smartcard operates only if it is plugged in the device that is referred to by the security policy.

After a Mediating badge and a smartcard are bound and the Mediating badge is turned on, the Mediating badge downloads all the parts of the centrally stored security policy that are relevant for the particular visitor. Afterwards the Mediating badge is operational.

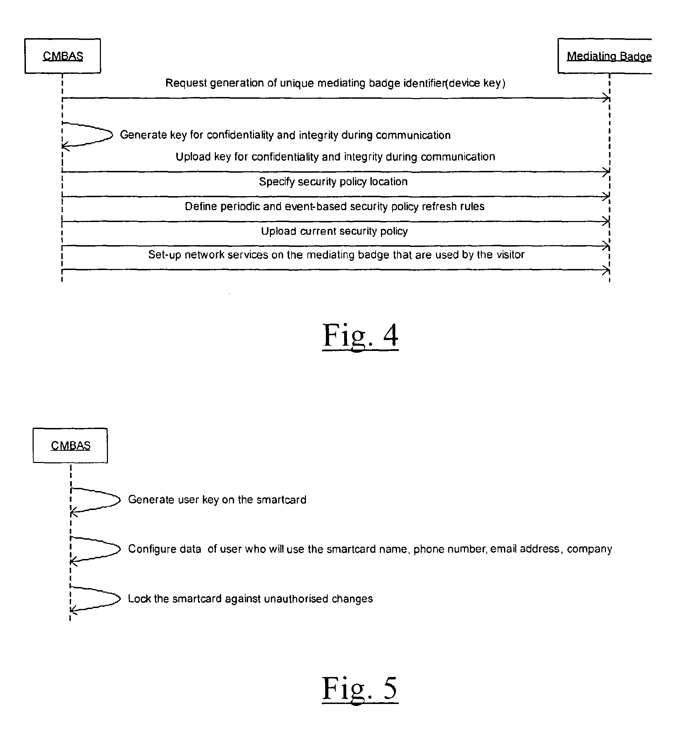

In the following the configuration and initialization of the mediating badge with the corporate network according to one embodiment will be described in somewhat more detail in connection with Fig. 4. It should be mentioned here that an embodiment of the invention may not only be implemented by the mediating badge, but also by the unit or entity in the company network which administrates the mediating badge and its access to the company network. E.g. the CMBAS or any entity or part of the company network performing its function may also be regarded as an implementation of an embodiment of the invention.

Before the Mediating badge can be used, it has to be initialized and configured. The Mediating badge provides two independent services for configuration. They are each only accessible via one of the wireless communication interfaces. One is for the administrator of the corporate network, the other is for the visitor.
The administrator of the corporate network has to create the unique identifier for the Mediating badge (the device key) on the Mediating badge which it requests in a first step, if this has not yet been done during the manufacturing process of the mediating badge. He then generates a key for confidentiality and integrity during communication and uploads it to the mediating badge together with the corporate key. Then in a third step he has to specify where the security policy can be got from and in which cases it has to be downloaded by the Mediating badge by defining the periodic and event-based security policy refresh rules. Then the security policy is uploaded and additionally, he has to set up access rights to the configuration service and to set up network services (such as DHCP) on the Mediating badge for the visitor.

For the initial configuration comprising the steps mentioned before, the Mediating badge is preferably connected to the CMBAS directly by connecting it to a separate network interface (not shown) where no further devices are connected to. This avoids that the sensitive data which are transferred during the initialization are transmitted over an interface which is also used by other users. The CMBAS in connection with the mediating badge then performs the initialization and configuration steps as mentioned before and as shown in Fig. 4.

In a further initialization procedure the smartcard, which is personalized for the visitor has to be initialized as well. This procedure according to one embodiment will now be described in connection with Fig. 5.

The smartcard has to generate a unique user key, the administrator of the corporate network has to configure user data (such as name, affiliation, and contact data) and has to lock the smartcard against unauthorized access. This may be done under control of the administrator by using the CMBAS which may comprise or be connected to a smartcard issuing device to issue the thus initialized smartcard which may then be handed out to the visitor together with the mediating badge.

Instead of the CMBAS also a different client computer of the corporate network may be used, however, the personalization data should be stored on the CMBAS since it is the device which maintains and administrates the security policy and ultimately allows access to a visitor by implementing the security corresponding to the visitor's personalization data on the mediating badge.

According to one embodiment, once the initial configuration process is finished, the mediating badge only operates if encrypted communication to the corporate network and to the visitor's device is activated.
Additionally, on the corporate network the following tasks have to be done:
- Create a user account on the corporate network for the mediating badge and assign groups according to the role(s) of the user of the Mediating badge (the visitor) to that account
- Specify/adjust security policy by defining rights of these groups to enable the visitor to access resources on the corporate network

The security policy is maintained at the CMBAS. On the one hand it specifies access control to services and resources on the corporate network; on the other hand, the mediating badge uses the security policy for its firewall/gateway filtering decisions.

In the following the initialization of the visitor part of the Mediating badge will be described in somewhat more detail.

According to one embodiment the initialization of the visitor part of the mediating badge can only be performed if the corporate network part has been initialized successfully. The configuration service for the visitor part is not running before. In addition, a valid visitor smartcard has to be inserted and that smartcard has to be bound to the mediating badge. Binding in one embodiment means that the correspondence between the smartcard (or the personalization data stored thereupon) and the mediating badge is established, and the correspondence has been notified to the company network 120, e.g. to the CMBAS. The company network then is aware of the fact that the smartcard is assigned to a distinct mediating badge identified by its device key, and once this correspondence has been established the company network knows that the thus identified pair of smartcard and mediating badge correspond to the certain visitor for which the smartcard was issued and that the thus identified badge is to be granted the access rights defined by the security policy corresponding to the personalization data of the visitor which were entered onto the smartcard. Therefore, if the mediating badge identifies itself towards the company network by its device key and further by the one or more personalization data stored on the smartcard (e.g. the ID of the visitor) the company network grants the apparatus access through the second access unit 140. Using the smartcard by the visitor together with a different (e.g. manipulated) badge will not work because the correct device key corresponding ("bound to") the personalization data is not presented to the network by the badge. Similarly, using the badge with a different (e.g. tampered) smartcard will not work, because the correct personalization data corresponding to the device key can not be presented to the network, and as a consequence access will be denied. Only if the correct pair of device key and personalization data (one or more elements thereof) are presented to the company network 120 access is granted to the badge 100.

The "binding" between device key and personalization data (or "smartcard") continues as long as the badge is used by the visitor. When usage is terminated the binding may be dissolved. In case of another visitor wishing to use the badge a new personalization and a new binding will be necessary.

According to one embodiment the personalization data which is stored on the smartcard is protected to make it tamper-resistant in order to prevent that a faked smartcard can be generated which an attacked may then use in connection with a mediating badge instead of the one he received from the administrator to gain access rights which he should not be granted. This may be prevented by suitably encrypting or at least signing the personalization data (e.g. with the company key) on the smartcard which makes it difficult to modify them, or in case of them being signed makes it at least possible to verify whether they have been generated by a trusted party (e.g. the company).

After initialization the Mediating badge is handed out to the visitor. Additionally the visitor gets access information (e. g. in the case of Bluetooth he gets the PIN) to be able to register his personal devices with the Mediating badge. The visitor also gets the finger print of the public corporate key stored on the mediating badge to enable him to authenticate it as belonging to the company. Kind and number of devices the visitor brings according to one embodiment is not restricted. As long as devices support the communication technology and security services required by the mediating badge, the user may connect what ever device he wants to. The visitor connects his personal device to the mediating badge, enters the access information and if necessary additional credentials to enable encrypted communication between the devices. As soon as this is done, the visitor is able to communicate with the visited corporate network via encrypted air interfaces.

According to one embodiment there are further provided services for network information provided by the mediating badge to the user. They are to enable the visitor to configure his device's network settings properly. For instance, these services include DHCP relay server, print job spooler, HTTP proxy, and more.

In the following the actual use of the mediating badge will be described in somewhat more detail.

What actions are allowed to be performed by the user and what resources he is allowed to access, is defined centrally by the security policy. Individual rights are assigned to the user account which the mediating badge has in the corporate network. With respect to the individual layers of the ISO/OSI model this may look as follows:
Layer 1/2: Encryption of transmitted data and authentication features are used if supported. If a user does not have access to the corporate network, the Mediating badge blocks all of his traffic here.
Layer 3/4: A packet filter firewall controls which destination hosts and which services (ports) are allowed to be accessed. If required, additional security features (like IPSec) are applied. They either need to be supported by the personal device of the user if the cryptographic endpoint is the user's personal device. Or, if the Mediating badge is the cryptographic endpoint, there is no need for the visitor's device to support IPSec. The Mediating badge will then decrypt data and re-encrypt it for the link to the visitor's device.
Layer 5/6/7: Access control can be managed more fine-grained in these layers but maintenance is more complex here. The mediating badge therefore has to be able to understand the protocols used in these layers to be able to analyze if a packet sent contains permitted content. This is only possible if there is no end-to-end encryption from the user's device to the entity in the corporate network.

Typically a visitor will be enabled to access resources on the corporate network (such as printers), share documents or applications with employees, and access the internet. In all these cases, according to one embodiment the visitor only shall have minimum rights to prevent him from influencing the corporate network or from gaining information he is not entitled for.

In the following the security mechanisms of the individual layers according to one embodiment are outlined in somewhat more detail.

| **Security mechanisms layer by layer** | |
|---|---|
| Layer 1 | physical technologies for data transmission are applied without adding additional functionality. |
| Layer 2 | security features for authentication, integrity, and/or confidentiality are used as far as they are defined in the physical technology used (e.g. WAP based encryption of 802.11 WLAN). |
| Layer 3 | packet filters for IP packets and related packets (e.g. ICMP, IGMP) are applied and integrity, authenticity and confidentiality can be granted (e.g. by the use of IPSec). |
| Layer 4 | packet filters for TCP/UDP packets are applied (e.g. for HTTP, NFS, SMTP, etc). Confidentiality and authenticity can be granted (e.g. by the use of SSL/TLS) |
| Layers 5-7 | If there are additional application specific protocols used by an application (such as WSDL or UDDI), additional filtering can be done here. |

In the layers 4 to 7 there are two ways to process data transportation through the Mediating badge:
1. filter commands
2. rebuild service locally on the Mediating badge
Approach 1 means that commands and parameters of layer 4 to 7 protocols are filtered to restrict access to services on the corporate network. This is the functionality of an application filter.
Approach 2 means that the service on the corporate network is rebuilt as a proxy-like component on the Mediating badge. The mobile device always connects to the service on the Mediating badge. The Mediating badge interprets the request from the mobile device and sends an appropriate request to the respective service on the corporate network.
The advantage of approach 2 is that the visitor never has direct connection to the services on the corporate network. This means on the one hand that it is more secure as the visitor only accesses the Mediating badge and on the other hand, in the corporate network, services can be configured for access credentials that are only known by the Mediating badge which uses these services in behalf of the visitor.

The services have to be set up on the Mediating badge and it has to be specified, how requests from the visitor are translated to those sent out on the corporate network, e.g. by a suitably configured lookup-table.

The mediating badge in one embodiment supports both approaches. The administrator is able to choose the preferred approach for each service to be configured by appropriately setting up the security policy.

If the visitor is allowed to access the internet, encrypted packets may also be allowed as long as only destinations outside the corporate network are addressed. This enables the visitor to use SSL/TLS connections, to use SSH or to set up a virtual private network (VPN) connection to his office. Since these packets are only forwarded to the internet, there is no need for the Mediating badge to understand the content. The mobile device of the visitor should not be allowed to send encrypted packets to the corporate network. In one embodiment, all the packets that pass the firewall between the corporate network and the Restricted Network as shown in Figure 3 have to be parsed by the mediating badge. Such packets which do not pass that firewall and by their target address are identified as being directed to the internet need not to be parsed but may remain encrypted.

The two firewalls in the corporate network (between the Internet and the core network as shown in Figure 3) are able to support the work of the Mediating badge. They either do (parts of) the firewall's job of the mediating badge or they only forward packages that originate from a registered mediating badge. The former one can be done by applying the centrally administered security policy not only to the mediating badge but also to the firewalls. The latter one can for instance be done by using IPSec, e.g. for forwarding packets to the internet. The mediating badge then sends signed packets (e.g. signed by the device key of the mediating badge as an indication that the packets have been checked by the mediating badge) and the firewall to the core network only forwards these signed packets to the internet.

The mediating badge as described in the foregoing embodiments protects the corporate network against visiting mobile devices of other administrative domains that need restricted access to the corporate network. The corporate network is protected by having the Mediating badge in-between the corporate network and the visiting mobile device. The Mediating badge belongs to the administrative domain of the corporate network and is as such controlled by the corporate network. A fine-grained access control, to be applied by security policies, restricts the mobile device's access to the corporate network. This on the one hand prevents it from accessing sensitive digital assets and on the other hand from spreading malware. The Mediating badge of course does not protect against intentionally disclosed data which is not protected by the security policy. If access rights are assigned to a Mediating badge, the mobile device can exploit them. Therefore, security policies have to be restrictive and have to be administered with caution.

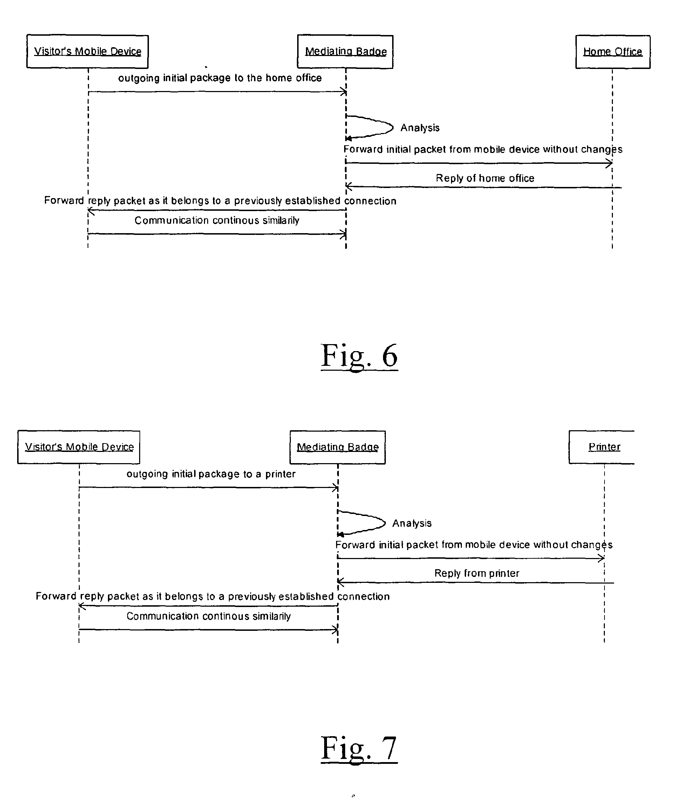

In the following there will be described some examples of concrete usage scenarios that illustrate how the mediating badge operates. The first example is the connection from the visitor to its home office through a virtual private network which will be described in connection with Fig. 6. Fig. 6 shows the initiation of the connections, the initiated communication continues in the same manner.

In this application the Mediating badge forwards the packets to/from the internet. An initial packet arrives at the mediating badge and is analyzed. The analysis in the Mediating badge consists of determining that the destination is outside the corporate network. Once this is confirmed, the packet is forwarded without changes. Since the reply belongs to the previously established connection it is forwarded to the visitor's device. Then the connection continues in similar manner.

In the following there will be described a further example in connection with Fig. 7 where the Mediating badge forwards the packets to/from the printer in the core corporate network.

Also in this case the initial packet is forwarded from the visitor's device to the mediating badge where it is analyzed. The analysis in the Mediating badge consists of determining that:
- the destination is inside the corporate network
- the destination is a printer
- the packet contains LPR content
- the visitor is allowed to use this specific printer according to the secunty policy.

If the check is performed successfully it is concluded that the packets can be forwarded.

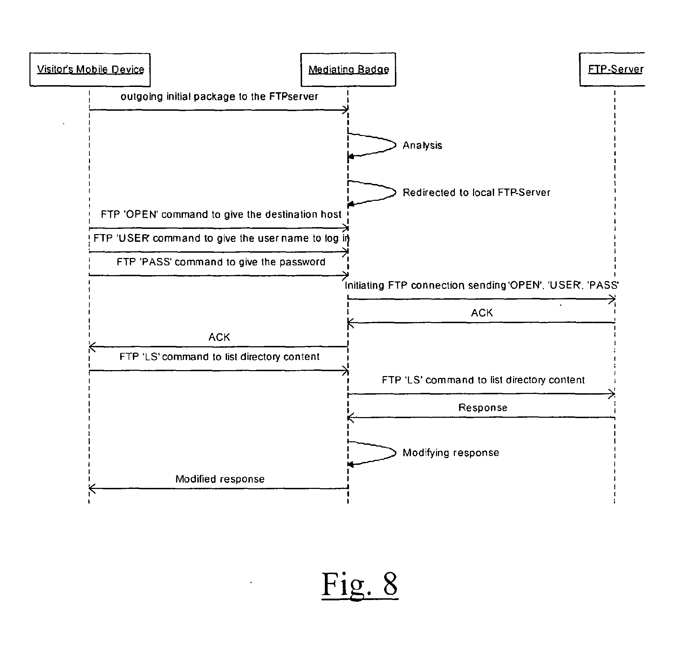

In the following there will be described a further embodiment in connection with Fig. 8 in which a visitor connects to an FTP server on the corporate network. In this embodiment the mediating badge acts like a proxy and "rebuilds" the FTP service on the mediating badge. Rather than merely filtering the messages in this case the mediating badge redirects packets to its local FTP client and creates new requests which are sent to the FTP-Server on the corporate network. This makes it possible to restrict access to the FTP server in a very specific manner as defined by the security policy.

E.g. the analysis in the Mediating badge consists of checking whether:
- the destination is inside the corporate network
- the destination is a FTP-Server
- the packet contains FTP commands
- the visitor is allowed to use this specific FTP-Server but does not have full access according to the security policy

In this example the visitor maybe is allowed to use this specific FTP-Server but does not have full access according to the security policy. The visitor does not know his access credentials (username, password) for the FTP-Server. He only knows those of the Mediating badge. The access credentials to the FTP server may be stored on the mediating badge. If the check as mentioned above leads to a positive result the access credentials stored in the mediating badge are used to access the FTP server.

Packets which are sent from the visitor's device are then sent to the local FTP-Server on the Mediating badge and modified before they are sent to the FTP-Server on the corporate network.

Packets sent to/from the FTP-Server on the corporate network are modified by the Mediating badge in the way that commands the user is not allowed to send are rejected and responses from the FTP-Server are shortened or abbreviated or filtered to remove all the elements (files, directories) which the visitor is not allowed to access.

In this embodiment the visitor does not have the access credentials (username, password) for the FTP-Server on the corporate network. Only the Mediating badge does have them. These credentials are unique for the visitor but the visitor needs the Mediating badge in order to be able to access the FTP-Server. For all the services on the Mediating badge, the visitor is provided with one set of username and password.

It will be understood by the skilled person that the embodiments of the present invention may be implemented and used in connection with any networks, not only company networks. It will therefore be appreciated that the term "company network" used hereinbefore or in the following claims is to be understood as referring to a network owned or operated by an entity which wants to somehow restrict access to the network. Such an entity may be a company, a university, a research institute, a governmental body, an individual, or any other person or institution who wishes to grant only limited access to the network in a manner which can be controlled by a security policy as described in connection with the foregoing embodiments.

It will be understood by the skilled person that the embodiments described hereinbefore may be implemented by hardware, by software, or by a combination of software and hardware. The modules described in connections with embodiments of the invention may be as a whole or in part implemented by microprocessors or computers which are suitably programmed such as to act in accordance with the methods explained in connection with embodiments of the invention.

According to an embodiment of the invention there is provided a computer program, either stored in a data carrier or in some other way embodied by some physical means such as a recording medium or a transmission link which when being executed on a computer enables the computer to operate in accordance with the embodiments of the invention described hereinbefore.

## Claims

1. An apparatus (100) for connecting a computing device (110) of a visitor to a computer network (120) of an entity which wishes to limit access to its network, said apparatus comprising:
a personalizing unit (160) for enabling the entering of personalization data by an administrator to personalize said apparatus for said visitor, whereas said personalization data are stored in said personalizing unit or entered therein via a smartcard to identify said apparatus as belonging to a certain visitor;
a first access unit (130) comprising a first interface for enabling said visitor to access said apparatus through said first interface;
a second access unit (140) comprising a second interface for enabling said apparatus to access said computer network through said second interface based on said personalization data;
a filtering unit (150) for filtering the traffic between said first and said second interfaces to thereby enforce a security policy which is based on said personalization data to thereby enable said visitor to access said computing network of said entity through a path comprising said first interface and said second interface while enforcing said security policy said apparatus further comprising:
a storing unit for storing access credentials to enable said second access unit to access said company network, whereas said access credentials are stored in said apparatus in a tamper-resistant manner and are undisclosed to the visitor, whereas said access credentials comprise a device key being specific for said apparatus, and said device key is bound to said personalization data by having notified an administration apparatus of said company network about the correspondence between said apparatus (100) identified by its device key and said personalization data so that access to said company network is granted or denied based on the personalization data and the device key presented to said company network by said second access unit.

2. The apparatus of claim 1, wherein
a look-up unit for looking up a security policy in said computer network based on said personalizing data entered by said administrator into said personalizing unit (160).

3. The apparatus of one of claims 1 to 2, further comprising
a checking unit for checking whether said visitor has successfully accessed said apparatus through said first interface, and
in case of a successful access, allowing said user to access said company network through said second interface while enforcing said security policy by said filtering unit based on the personalized data in said personalizing unit.

4. The apparatus of one of claims 1 to 3, wherein
the personalizing unit (160) comprises a smartcard reader to enable said personalizing data to be held in a smartcard.

5. The apparatus of one of claims 1 to 4, wherein
the first interface (130) is a wireless interface, and/or
the second interface (140) is a wireless interface.

6. The apparatus of one of claims 1 to 5, wherein
said apparatus (100) takes the form of a badge which may be worn by a visitor.

7. The apparatus according to one of the preceding claims, further comprising:
an initialization unit for initializing said apparatus (100) by connecting to said company network (120) through said second interface and uploading the necessary data to said apparatus to configure it such that it allows said visitor to access the company network.

8. The apparatus (100) according to one of the preceding claims, further comprising:
a rebuilding unit for rebuilding a service of the company network (120) on said apparatus and for interpreting a service request from the visitor's device and sending an appropriate corresponding request to said company network in accordance with said security policy.

9. A system comprising an apparatus according to one of claims 1 to 8 and an administration apparatus connected to a company network to which said apparatus (100) according to one of claims 1 to 8 is connected, said administration apparatus comprising:
a checking unit for checking whether said apparatus should be granted access based on the personalization data and/or access credentials stored in said apparatus, said administration apparatus further comprising:.
an administration unit for storing administration data about said apparatus and its corresponding personalization data, wherein
said administration data comprises a device key as device specific data for said apparatus and which is assigned corresponding personalization data: whereas
said checking unit is adapted to check the device specific data and the personalization data presented by said apparatus (100) to based thereupon whether access to said company network is granted or denied.

10. The system of claim 9, wherein
said access credentials further comprise:
a company specific key.

11. The system of claim 9 or 10, wherein
said administration unit is adapted to store a security policy corresponding to said personalization data and further adapted to allow transfer of said security policy to said apparatus (100) to thereby implement a limited access to said company network based on said security policy.

## Patentansprüche

1. Vorrichtung (100) zum Verbinden einer Rechnervorrichtung (110) eines Besucher mit einem Computernetzwerk (120) einer Entität, die den Zugriff auf ihr Netzwerk begrenzen möchte, wobei die Vorrichtung aufweist:
eine Personalisierungseinheit (160), um das Eingeben von Personalisierungsdaten durch einen Administrator zur Personalisierung der Vorrichtung für den Benutzer zu ermöglichen, wobei die Personalisierungsdaten in der Personalisierungseinheit gespeichert werden oder darin über eine Smartcard eingegeben werden, um die Vorrichtung als zu einem bestimmten Besucher zugehörig zu identifizieren;
eine erste Zugriffseinheit (130), welche ein erstes Interface aufweist, um dem Besucher zu ermöglichen, auf die Vorrichtung über das erste Interface zuzugreifen;
eine zweite Zugriffseinheit (140), die ein zweites Interface aufweist, um der Vorrichtung zu ermöglichen, auf das Computernetzwerk über das zweite Interface basierend auf den Personalisierungsdaten zuzugreifen;
eine Filter-Einheit (150), um den Verkehr zwischen dem ersten und dem zweiten Interface zu filtern, um dadurch eine Sicherheitsrichtlinie durchzusetzen, die basiert auf den Personalisierungsdaten, um dadurch dem Besucher zu ermöglichen, auf das Computernetzwerk der Entität zuzugreifen, und zwar über einen Pfad, der das erste Interface und das zweite Interface umfaßt, während die Sicherheitsrichtlinie durchgesetzt wird, wobei die Vorrichtung ferner aufweist:
eine Speichereinheit, zum Speichern von Zugriffs-Berechtigungsnachweisen, um die zweite Zugriffseinheit in die Lage zu versetzen, auf das Firmennetzwerk zuzugreifen, wobei die Zugriffs-Berechtigungsnachweise in der Vorrichtung auf manipulationssichere Weise gespeichert werden und dem Besucher nicht offenbart werden, wobei die Zugriffs-Berechtigungsnachweise einen Vorrichtungsschlüssel umfassen, der spezifisch für die Vorrichtung ist und der Vorrichtungsschlüssel an die Personalisierungsdaten gebunden ist, indem eine Administrationsvorrichtung des Firmennetzwerks über die Entsprechung zwischen der Vorrichtung (100), die durch ihren Vorrichtungsschlüssel identifiziert wird, und die Personalisierungsdaten benachrichtigt wurde, so dass der Zugriff auf das Firmennetzwerk gestattet oder verweigert wird basierend auf den Personalisierungsdaten und dem Vorrichtungsschlüssel, der dem Firmennetzwerk durch die zweite Zugriffseinheit präsentiert wird.

2. Vorrichtung nach Anspruch 1, mit
einer Nachschlageeinheit zum Nachschlagen einer Sicherheitsrichtlinie in dem Computernetzwerk basierend auf den Personalisierungsdaten, die von dem Administrator in die Personalisierungseinheit (160) eingegeben wurden.

3. Vorrichtung nach einem der Ansprüche 1 oder 2, ferner aufweisend:
eine Prüfungseinheit zum Prüfen, ob die Suche erfolgreich auf die Vorrichtung über das erste Interface zugegriffen hat, und
im Falle erfolgreichen Zugriffs, es dem Besucher ermöglichen, auf das Firmennetzwerk über das zweite Interface zuzugreifen, während die Sicherheitsrichtlinie durch die Filtereinheit basierend auf den personalisierten Daten in der Personalisierungseinheit durchgesetzt wird.

4. Vorrichtung nach einem der Ansprüche 1 bis 3, wobei
die Personalisierungseinheit (160) einen Smartcard-Leser aufweist, um es zu ermöglichen, dass die Personalisierungsdaten in einer Smartcart gehalten werden.

5. Vorrichtung nach einem der Ansprüche 1 bis 4, wobei
das erste Interface (130) ein drahtloses Interface ist und/oder
das zweite Interface (140) ein drahtloses Interface ist.

6. Vorrichtung nach einem der Ansprüche 1 bis 5, wobei
die Vorrichtung (100) die Form eines Ansteckers annimmt, der von einem Benutzer getragen wird.

7. Vorrichtung nach einem der vorhergehenden Ansprüche, ferner aufweisend:
eine Initialisierungseinheit zum Initialisieren der Vorrichtung (100) durch Verbinden mit dem Firmennetzwerk (120) über das zweite Interface und Hochladen der notwendigen Daten, um die Vorrichtung zu konfigurieren dergestalt, dass sie dem Benutzer den Zugriff auf das Firmennetzwerk ermöglicht.

8. Vorrichtung (100) nach einem der vorhergehenden Ansprüche, ferner aufweisend:
eine Einheit zum erneuten Aufbau, um einen Dienst des Firmennetzwerks (120) auf der Vorrichtung erneut aufzubauen und zum Interpretieren einer Serviceanforderung von der Vorrichtung des Besuchers und zum Senden einer geeigneten entsprechenden Anforderung an das Firmennetzwerk in Übereinstimmung mit der Sicherheitsrichtlinie.

9. System aufweisend eine Vorrichtung gemäß einem der Ansprüche 1 bis 8 und eine Administrationsvorrichtung, die mit einem Firmennetzwerk verbunden ist, zu dem eine Vorrichtung (100) gemäß einem der Ansprüche 1 bis 8 verbunden wird, wobei die Administrationsvorrichtung aufweist:
eine Prüfungseinheit zum Prüfen, ob der Vorrichtung Zugriff gewährt werden soll basierend auf den Personalisierungsdaten und/oder Zugriffs-Berechtigungsnachweisen, die in der Vorrichtung gespeichert sind, wobei die Administrationsvorrichtung ferner aufweist:
eine Administrationseinheit zum Speichern von Administrationsdaten über die Vorrichtung und ihre entsprechenden Personalisierungsdaten, wobei
die Administrationsdaten einen Vorrichtungsschlüssel als spezifische Daten für die Vorrichtung umfassen und diesem entsprechende Personalisierungsdaten zugewiesen sind, wobei
die Prüfungseinrichtung angepaßt ist, um die gerätespezifischen Daten und die Personaliserungsdaten, die durch die Vorrichtung (100) präsentiert werden, zu prüfen, um basierend darauf Zugriff zu dem Firmennetzwerk zu gestatten oder zu verweigern.

10. System nach Anspruch 9, wobei
die Zugriffs-Berechtigungsnachweise ferner aufweisen: einen firmenspezifischen Schlüssel.

11. System nach Anspruch 9 oder 10, wobei
die Administrationseinheit angepaßt ist, eine Sicherheitsrichtlinie, die den Personalisierungsdaten entspricht, zu speichern und ferner angepaßt ist, eine Übertragung der Sicherheitsrichtlinie auf die Vorrichtung (100) zu erlauben, um dadurch einen begrenzten Zugriff auf das Firmennetzwerk basierend auf der Sicherheitsrichtlinie zu implementieren.

## Revendications

1. Appareil (100) destiné à connecter un dispositif informatique (110) d'un visiteur à un réseau d'ordinateurs (120) d'une entité qui souhaite limiter l'accès à son réseau, ledit appareil comportant :
une unité de personnalisation (160) destinée à permettre l'entrée de données de personnalisation par un administrateur en vue de personnaliser ledit appareil pour ledit visiteur, où lesdites données de personnalisation sont stockées dans ladite unité de personnalisation ou sont entrées dans celle-ci via une carte à puce intelligente pour identifier ledit appareil comme appartenant à un certain visiteur ;
une première unité d'accès (130) comportant une première interface en vue de permettre audit visiteur d'accéder audit appareil via ladite première interface ;
une seconde unité d'accès (140) comportant une seconde interface en vue de permettre audit appareil d'accéder audit réseau d'ordinateur par l'intermédiaire de ladite seconde interface sur la base desdites données de personnalisation ;
une unité de filtrage (150) en vue de filtrer le trafic entre lesdites première et seconde interfaces afin d'appliquer, par conséquent, une politique de sécurité informatique qui est basée sur lesdites données de personnalisation afin de permettre par conséquent audit visiteur d'accéder audit réseau d'ordinateurs de ladite entité par un chemin comportant ladite première interface et ladite seconde interface tout en appliquant ladite politique de sécurité informatique,
ledit appareil comportant en outre une unité de stockage en vue de stocker des justificatifs d'identité d'accès pour permettre à ladite seconde unité d'accès d'accéder audit réseau d'entreprise, où lesdits justificatifs d'identité d'accès sont stockés dans ledit appareil d'une manière inviolable et ne sont pas divulgués au visiteur, où lesdits justificatifs d'identité d'accès comportent une clé de dispositif étant spécifique audit dispositif, et ladite clé de dispositif est liée auxdites données de personnalisation par le fait qu'il a été indiqué, à un appareil d'administration dudit réseau d'entreprise, la correspondance entre ledit appareil (100) identifié par sa clé de dispositif et lesdites données de personnalisation de sorte qu'un accès audit réseau d'entreprise est accordé ou refusé sur la base des données de personnalisation et de la clé de dispositif présentés audit réseau d'entreprise par ladite seconde unité d'accès.

2. Appareil selon la revendication 1, comportant une unité de consultation en vue de consulter une politique de sécurité informatique dans ledit réseau d'ordinateurs sur la base desdites données de personnalisation entrées par ledit administrateur dans ladite unité de personnalisation (160).

3. Appareil selon l'une quelconque des revendications 1 à 2, comprenant en outre une unité de vérification en vue de vérifier si ledit visiteur a réussi à accéder audit appareil via ladite première interface, et en cas de succès de l'accès, permettant audit utilisateur d'accéder audit réseau d'entreprise via ladite seconde interface tout en appliquant ladite politique de sécurité informatique au moyen de ladite unité de filtrage sur la base des données personnalisées dans ladite unité de personnalisation.

4. Appareil selon l'une quelconque des revendications 1 à 3, dans lequel l'unité de personnalisation (160) comporte un lecteur de carte à puce intelligente en vue de permettre auxdites données de personnalisation d'être conservées dans une carte à puce intelligente.

5. Appareil selon l'une quelconque des revendications 1 à 4, dans lequel la première interface (130) est une interface sans fil, et/ou la seconde interface (140) est une interface sans fil.

6. Appareil selon l'une quelconque des revendications 1 à 5, dans lequel ledit appareil (100) prend la forme d'un badge qui peut être porté par un visiteur.

7. Appareil selon l'une quelconque des revendications précédentes, comportant en outre une unité d'initialisation en vue d'initialiser ledit appareil (100) en le connectant au réseau d'entreprise (120) via ladite seconde interface et en téléchargeant les données nécessaires audit appareil en vue de le configurer de sorte qu'il autorise ledit visiteur à accéder au réseau d'entreprise.

8. Appareil (100) selon l'une quelconque des revendications précédentes, comportant en outre une unité de reconstruction en vue de reconstruire un service du réseau d'entreprise (120) sur ledit appareil et d'interpréter une demande de service du dispositif du visiteur et d'envoyer une demande correspondante appropriée audit réseau d'entreprise selon ladite politique de sécurité informatique.

9. Système comportant un appareil selon l'une quelconque des revendications 1 à 8 et un appareil d'administration connecté à un réseau d'entreprise auquel ledit appareil (100) selon l'une quelconque des revendications 1 à 8 est connecté, ledit appareil d'administration comprenant une unité de vérification en vue de vérifier si ledit appareil devrait recevoir une autorisation d'accès sur la base des données de personnalisation et/ou de justificatifs d'identité d'accès stockés dans ledit appareil, ledit appareil d'administration comportant une unité d'administration en vue de stocker des données d'administration afférentes audit appareil et à ses données de personnalisation, dans lequel lesdites données d'administration comportent une clé de dispositif en tant que données spécifiques au dispositif pour ledit appareil et à laquelle sont affectées des données de personnalisation correspondantes ; où ladite unité de vérification est adaptée en vue de vérifier les données spécifiques au dispositif et les données de personnalisation présentées par ledit appareil (100) afin de déterminer sur la base de celles-ci si l'accès au réseau d'entreprise est accordé ou refusé.

10. Système selon la revendication 9, dans lequel lesdits justificatifs d'identité d'accès comportent en outre une clé spécifique à l'entreprise.

11. Système selon la revendication 9 ou 10, dans lequel ladite unité d'administration est adaptée en vue de stocker une politique de sécurité informatique correspondant auxdites données de personnalisation et est en outre adaptée en vue de permettre le transfert de la politique de sécurité informatique audit appareil (100) en vue par conséquent de mettre en oeuvre un accès limité audit réseau d'entreprise sur la base de ladite politique de sécurité informatique.
